# EUROPÄISCHE PATENTANMELDUNG

(11) **EP 4 707 970 A1**
(43) Veröffentlichungstag der Anmeldung: **11.03.2026**
(21) Anmeldenummer: 24198854.2
(22) Anmeldetag: 06.09.2024
(51) Int. Cl.: G05B 19/4093, G05B 19/4097, B23B 3/26

(54) **VERFAHREN ZUM BETRIEB EINER DREHMASCHINE ZUR SPANENDEN BEARBEITUNG EINES WERKSTÜCKS MITTELS DREHENS UND DREHMASCHINE**

(71) Anmelder: Siemens Aktiengesellschaft, 80333 München (DE)
(72) Erfinder: Rack, Philip Joachim, 70197 Stuttgart, S-West (DE); Schermann, Aleksandra, 71229 Leinfelden-Echterdingen (DE); Spielmann, Ralf, 70569 Stuttgart (DE)
(74) Vertreter: Siemens Patent Attorneys

(57) **Zusammenfassung**

Die Erfindung betrifft eine Drehmaschine und ein Verfahren zum Betrieb einer Drehmaschine (TMC) zur spanenden Bearbeitung eines Werkstücks (WPC) mittels Drehens. Zur automatischen Umsetzung von Anweisungssequenzen (SQC) ohne manuelles Zutun wird vorgeschlagen, dass die Anweisungssequenz (SQC) umfasst:
- Definieren einer positiven ersten Koordinatenrichtung (CFD) für alle Arbeitsmodi (WMD) jeweils in Richtung der Spindel (SPD), die die Drehung nicht bestimmt,
- Definieren einer jeweils positiven zweiten Koordinatenrichtung (CSD) fortweisend von der Werkstückdrehachse (XWP) für alle Arbeitsmodi (WMD), so, dass mittels einer für jeden möglichen Wechsel von einem bestimmten Arbeitsmodus (WMD) in einen anderen bestimmten Arbeitsmodus (WMD) eine festgelegte Kette von Rotationen, Spiegelungen und/oder Verschiebungen der Koordinatenangaben (CDR) der Anweisungssequenz (SQC) Koordinatenangaben (CDR) für den jeweils aktuellen Arbeitsmodus (WMD) kompatibel macht,
wobei die Anweisungssequenz (SQC) weiterhin umfasst:
- Definieren einer positiven Drehrichtung (RTD) der Werkzeugdrehachse (XTL) jeweils für alle Arbeitsmodi (WMD) von der ersten Koordinatenrichtung (CFD) über den kürzeren Drehwinkel hin zu der zweiten Koordinatenrichtung (CSD),
- Definieren eines Nullwinkels (ZAG) der Werkzeugdrehachse (XTL) für alle Arbeitsmodi (WMD) jeweils koinzident mit der jeweils zweiten Koordinatenrichtung (CSD).

## Beschreibung

### Technisches Gebiet

Die Erfindung betrifft ein Verfahren zum Betrieb einer Drehmaschine zur spanenden Bearbeitung eines Werkstücks mittels Drehens. Ferner sind von der Erfindung Drehmaschinen mit einer Steuerungseinheit umfasst.

### Technischer Hintergrund

Bislang ist es problemlos, die Geometriebeschreibung [CAD-Daten] des Werkstücks aber auch entsprechende Fertigungsinstruktionen [CAM-Daten] für die Maschine an die Terminologie bzw. Koordinatensysteme des jeweils aktuellen Arbeitsmodus anzupassen, beispielsweise derart, dass wenn die Drehmaschine von einem ersten Arbeitsmodus in einen zweiten Arbeitsmodus wechselt, die erforderlichen Koordinatentransformationen mittels Rotationen, Spiegelungen und/oder Verschiebungen aller Koordinatenangaben für den aktuellen zweiten Arbeitsmodus durchgeführt werden.

Diese Anpassung der Geometriebeschreibung [CAD-Daten], der

Fertigungsinstruktionen [CAM-Daten], der Koordinatenangaben an den jeweils aktuellen Arbeitsmodus funktioniert bislang nicht für die Anpassung der Anstellung des Werkzeugs mittels einer Drehung des Werkzeughalters um die dritte Drehachse.

### Zusammenfassung der Erfindung

Die Aufgabe der Erfindung besteht darin, das beschriebene Problem im Stand der Technik zu beheben. Insbesondere ist es Aufgabe, das Verfahren derart weiterzubilden, dass der Umgang der Drehmaschine mit den Anweisungssequenzen der Fertigungsinstruktionen [CAM-Daten] vollautomatisch erfolgt und keine manuellen Anpassungen der Drehung des Werkzeughalters um die dritte Drehachse auf Basis der Geometriebeschreibung [CAD-Daten] des Werkstücks erfordert.

Beschrieben wird gemäß einem ersten Aspekt der Erfindung ein Verfahren zum Betrieb einer Drehmaschine zur spanenden Bearbeitung eines Werkstücks mittels Drehens,
- wobei die Drehmaschine Spindeln aufweist, umfassend eine Hauptspindel und eine Gegenspindel, die um eine Werkstückdrehachse jeweils drehbar ausgeführt sind,
- wobei die Drehmaschine mindestens einen Werkzeughalter und mindestens ein Werkzeug aufweist,
- wobei der Werkzeughalter das mindestens eine Werkzeug zur spanenden Bearbeitung des Werkstücks hält und die Bewegung des Werkzeugs führt,
- wobei das Werkzeug mindestens eine Schneide zur spanenden Bearbeitung des Werkstücks aufweist,
- wobei die Drehmaschine eine programmierbare Steuerung aufweist, die mittels der Ausführung einer Anweisungssequenz die Bewegungen der Spindeln und des mindestens einen Werkzeugs steuert,
- wobei der Werkzeughalter, mit dem mindestens einem Werkzeug derart um eine Werkzeugdrehachse drehbar ausgebildet ist, dass ein spanender Berührpunkt der Schneide an dem Werkstück in einem Sollwinkel zu der Werkstückoberfläche ausgerichtet werden kann,
wobei die Drehmaschine verschiedene Arbeitsmodi des Werkzeugs mit unterschiedlichen Festlegungen eines Werkstückkoordinatensystems aufweist.

Erfindungsgemäß ist vorgesehen, dass die Anweisungssequenz umfasst:
- Definieren einer positiven ersten Koordinatenrichtung für alle Arbeitsmodi jeweils in Richtung der Spindel, die die Drehung nicht bestimmt,
- Definieren einer jeweils positiven zweiten Koordinatenrichtung fortweisend von der Werkstückdrehachse für alle Arbeitsmodi,

so, dass mittels einer für jeden möglichen Wechsel von einem bestimmten Arbeitsmodus in einen anderen bestimmten Arbeitsmodus eine festgelegte Kette von Rotationen, Spiegelungen und/oder Verschiebungen der Koordinatenangaben der Anweisungssequenz Koordinatenangaben für den jeweils aktuellen Arbeitsmodus kompatibel macht,
wobei die Anweisungssequenz weiterhin umfasst:
   - Definieren einer positiven Drehrichtung der Werkzeugdrehachse jeweils für alle Arbeitsmodi von der ersten Koordinatenrichtung über den kürzeren Drehwinkel hin zu der zweiten Koordinatenrichtung,
   - Definieren eines Nullwinkels der Werkzeugdrehachse für alle Arbeitsmodi jeweils koinzident mit der jeweils zweiten Koordinatenrichtung,
   so, dass die Drehangaben der Anweisungssequenz für die Drehung des Werkzeugs um die Werkzeugdrehachse für alle Arbeitsmodi kompatibel sind.

Die erfindungsgemäße Lehre besteht darin, dass bereits die Anlage der Koordinatensysteme für die verschiedenen Arbeitsmodi bzw. Arbeitsbereiche der Drehmaschine derart aufeinander abgestimmt sind, dass die Drehangaben der Anweisungssequenz für die Drehung des Werkzeugs um die Werkzeugdrehachse für alle Arbeitsmodi auch kompatibel sind.

Auf diese Weise werden manuelle Anpassungen verhindert, so dass knappe Arbeitszeit qualifizierter CNC-Programmierer eingespart werden kann.

Die in dieser Erfindungsbeschreibung verwendeten Begriffe haben die folgende Bedeutung.

Die Drehmaschine ist eine Werkzeugmaschine, die für das Fertigungsverfahren Drehen verwendet wird. Manche Drehmaschinen besitzen auch Zusatzeinrichtungen zum Schleifen, Fräsen und/oder Stoßen. Derartige Drehmaschinen mit Zusatzfunktionen sind ebenfalls von der Erfindung umfasst. Mit einer Drehmaschine werden rotationssymmetrische Werkstücke (Drehteile) hergestellt.

Drehspindeln, Werkstückspindeln oder kurz Spindeln dienen an einer Drehmaschine dazu, das Werkstück in Rotation zu versetzen zum Zweck der spanenden Bearbeitung von Werkstücken mittels Drehens. Das Werkstück wird über ein Spannfutter an der jeweiligen Spindel eingespannt wird.

Das rotierende Werkstück wird durch mindestens ein an der Drehmaschine beweglich befestigtes Drehwerkzeug, kurz Werkzeug, spanend bearbeitet. Das Werkzeug, in der Regel der Drehmeißel, ist an einem Werkzeughalter befestigt, der in der Regel als sogenannter Werkzeugschlitten ausgeführt ist.

Das Werkzeug weist mindestens eine Schneide auf zur spanenden Bearbeitung des Werkstücks. Zur korrekten Bearbeitung ist es zweckmäßig, wenn die Schneide in einem Sollwinkel zu der Werkstückoberfläche ausgerichtet ist. Auf diese Weise kann eine gleichmäßige Qualität der erzeugten Geometrie und Oberfläche gewährleistet werden.

Die Drehmitte bezieht sich auf den Punkt an der Oberfläche des Werkstücks, um den es rotiert, wenn es auf der Drehmaschine eingespannt ist. Die Drehmitte ist der Bezugspunkt, um den das Werkstück gedreht wird, und es wird als Zentrum des Rotationsprozesses betrachtet. In der Regel befindet sich die Drehmitte in der Mitte des Werkstücks, es sei denn, es handelt sich um ein asymmetrisches Werkstück. In der Regel befindet sich die Drehmitte auf der Drehachse des Werkstücks.

Moderne Drehmaschinen weisen mehrere Werkzeuge auf, die in einem Revolverkopf des Werkzeughalters aufgenommen werden und je nach Bedarf zum Einsatz kommen.

Der Werkzeughalter führt mit dem Werkzeug eine Vorschubbewegung aus und nimmt dabei in der Regel kontinuierlich einen Span ab, indem der Werkzeughalter längs oder auch quer zur Rotationsachse des Werkstücks entlang der zu bearbeitenden Fläche bewegt wird.

Die Drehmaschine weist einen Hauptspindelantrieb und einen oder mehrere Vorschubantriebe auf. Die Vorschubantriebe bewegen den Werkzeughalter während der Hauptspindelantrieb das Werkstück in Rotation versetzt.

Zur Rundumbearbeitung des Werkstücks gibt es Zweispindel-Drehmaschinen mit versetzt entgegengerichteten Spindeln. Hat die erste Spindel ihr Programm abgefahren, gibt sie das Werkstück selbstständig an die zweite Spindel weiter, auf der anschließend die Rückseite des Teils bearbeitet wird. Die erste Spindel wird auch allgemein als Hauptspindel bezeichnet und die zweite Spindel wird als Gegenspindel bezeichnet. Vorliegend wird der Umstand, dass "auf" einer der beiden Spindeln das Werkstück bearbeitet wird derart beschrieben, als dass die jeweilige Spindel die Drehung des Werkstücks bestimmt.

Eine Drehmaschine hat gerade Hauptverfahrwege für den Werkzeughalter. Ein erster Hauptverfahrweg erstreckt sich in der Regel parallel oder antiparallel zu der Drehachse der Hauptspindel. In der Regel verfährt der sogenannte Werkzeugschlitten umfassend den Werkzeughalter und das Werkzeug entlang des ersten Hauptverfahrweges.

Ein zweiter Hauptverfahrweg erstreckt sich in der Regel senkrecht zu dem ersten Hauptverfahrweg, so dass sich beim Verfahren des Werkzeughalters entlang des zweiten Hauptverfahrweg eine radiale Distanz des Werkzeugs zu der Drehmitte verändert.

Zum Zweck der Positionierung des Werkzeugs entlang der Hauptverfahrwege ist den Hauptverfahrwegen jeweils eine Koordinatenachse eines Koordinatensystems zugewiesen, wobei im Betrieb der Drehmaschine bevorzugt die Position des Werkzeughalters zumindest mittelbar sensorisch abschnittsweise verifiziert wird. Zur Quantifizierung der Position des Werkzeugs sind die Hauptverfahrwege mit einer Maßeinheit versehen. Entlang der Hauptverfahrwege kann auf diese Weise die Position des Werkzeugs jeweils mittels der Angabe einer reellen Zahl angegeben werden.

Als Ursprung der Koordinatenachsen wird in zweckmäßiger Weise ein Punkt auf der Drehachse der Hauptspindel gewählt.

Somit ergeben sich für jeden Hauptverfahrweg zwei Möglichkeiten für eine positive Koordinatenrichtung. In Kombination der jeweils zwei Möglichkeiten für die beiden Koordinatenachsen ergeben sich vier Möglichkeiten ein Koordinatensystem zu definieren. Diese Koordinatensysteme können mittels Rotationen, Spiegelungen und/oder Verschiebungen ineinander überführt werden. Diese verschiedenen vier Koordinatensysteme des Werkstücks werden auch als Arbeitsbereiche, in der Folge als Arbeitsmodi der Drehmaschine bezeichnet.

Eine zu fertigende Geometrie des Werkstücks ist in einem Werkstückkoordinatensystem beispielsweise als ein CAD-Datensatz beschrieben.

Das Werkstückkoordinatensystem ist entweder von vorneherein als eines der oben beschriebenen Koordinatensysteme definiert oder kann mittels einer Rotation, Spiegelung und/oder Verschiebung in die oben beschriebenen Koordinatensysteme bzw. Arbeitsmodi überführt werden.

Das Werkzeug ist mittels des Werkzeughalters um eine dritte Drehachse drehbar. Auf diese Weise kann das Werkzeug zu der zu bearbeitenden Kontur des Werkstücks ausgerichtet werden, derart, dass die Anstellung zu der Oberfläche einen guten Spanabtrag ermöglicht und keine Kollisionen der Teile des Werkzeugs, die nicht direkt im Eingriff mit dem Werkstück stehen sollen, verhindert wird.

Beschrieben wird gemäß einem weiteren Aspekt der Erfindung eine Drehmaschine mit einer Steuerungseinheit und einer Schnittstelle zum Empfang einer Anweisungssequenz zur Bearbeitung eines Werkstücks. Erfindungsgemäß ist vorgesehen, dass die Steuerungseinheit ausgebildet und vorbereitet ist, das Verfahren nach einem der Ansprüche auszuführen.

Die mit diesem Aspekt der Erfindung verbundenen Vorteile sind vorstehend bereits erläutert worden.

### Ausgestaltungen der Erfindung

Weiterbildungen der Erfindung beschreibende Varianten werden nachfolgend ohne Beschränkung des grundlegenden Gedankens der Erfindung erläutert.

Eine vorteilhafte Weiterbildung der Erfindung sieht vor, dass die einzelnen Arbeitsmodi mit Bezug zu einer Teilungsebene entlang der Werkstückdrehachse im Einzelnen sind:
in einem ersten Arbeitsmodus ist der Berührpunkt auf einer ersten Seite der Werkstückdrehachse und die Hauptspindel bestimmt die Drehung des Werkstücks,
in einem zweiten Arbeitsmodus ist der Berührpunkt auf einer ersten Seite der Werkstückdrehachse und die Gegenspindel bestimmt die Drehung des Werkstücks,
in einem dritten Arbeitsmodus ist der Berührpunkt auf einer zweiten Seite der Werkstückdrehachse und die Hauptspindel bestimmt die Drehung des Werkstücks,
in einem vierten Arbeitsmodus ist der Berührpunkt auf einer zweiten Seite der Werkstückdrehachse und die Gegenspindel bestimmt die Drehung des Werkstücks.

Die Teilungsebene kann insbesondere vertikal verlaufen. Grundsätzlich ist auch eine horizontale Teilungsebene möglich oder eine Teilungsebene, die unter einem beliebigen Winkel zur der Vertikalen verläuft.

Eine derartige Festlegung ist zweckmäßig und ermöglicht vorteilhaft, die vollautomatisierte Umsetzung von Anweisungssequenzen.

Gemäß einer Variante sind die oben erklärten Aspekte der Erfindung dadurch bestimmt, die Drehmaschine eine zusätzliche Fräsfunktion aufweist zur spanenden Bearbeitung eines Werkstücks mittels Fräsens.

Ein Vorteil dieser Variante besteht darin, dass das Werkstück ohne aufwändiges Umspannen auf eine andere Maschine - ggf. nur an der Drehmaschine - vollständig bearbeitet werden kann.

Gemäß einer Variante der Erfindung ist vorgesehen, dass die Drehung der Werkzeugdrehachse zur Ausrichtung der Schneide an dem spanenden Berührpunkt an dem Werkstück seitens des Werkzeughalters von einer Ausgleichsbewegung begleitet ist, derart, die Drehung des Werkzeugs um die Werkzeugdrehachse keinen Einfluss auf die Lage des Berührpunktes der Schneide an dem Werkstück hat.

Ein Vorteil dieser Variante besteht darin, dass eine optimale Ausrichtung der Schneide des Werkzeugs unabhängig von dem sonstigen Fertigungsgeschehen stattfinden kann und dementsprechend die Qualität der Werkstückoberfläche gleichmäßig ist.

### Exemplarische Ausführungsbeispiele der Zeichnung

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Varianten der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Varianten der Erfindung kombinierbar. Im Einzelnen zeigen die Zeichnungen:
- Figur 1:: eine schematische dreidimensionale Darstellung eines Werkstücks während der Bearbeitung mittels eines Werkzeugs an einem Werkzeughalter einer ansonsten nicht dargestellten Drehmaschine;
- Figure 2:: eine Illustration, die einzelne Arbeitsbereiche der Drehmaschine darstellt;
- Figure 3:: eine Illustration, die Winkelanstellungen der Schneide eines Werkzeugs in den einzelnen Arbeitsbereichen ohne die Erfindung darstellt.
- Figure 4:: eine Illustration, die erfindungsgemäße Winkelanstellungen der Schneide eines Werkzeugs in den einzelnen Arbeitsbereichen darstellt.

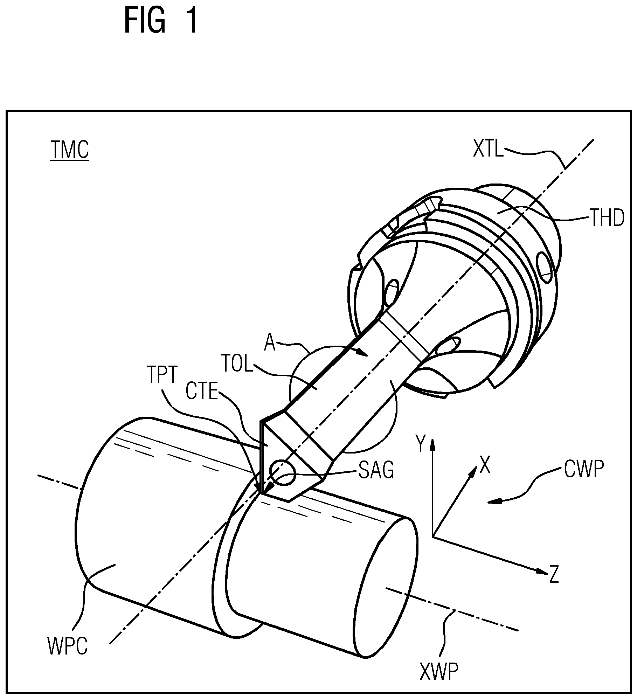

Figur 1 zeigt schematisch, dreidimensional die Bearbeitung eines runden Werkstücks WPC mittels eines in einen Werkzeughalter THD eingespannten Werkzeugs TOL. Weitere gegenständliche Einzelheiten der Drehmaschine TMC sind hier nicht dargestellt. Das Werkstück WPC weist ein Werkstückkoordinatensystem CWP auf und das Werkzeug TOL ist um eine Werkzeugdrehachse XTL drehbar ausgebildet, wobei der Werkzeughalter THD die jeweilige Drehung ausführt. Mittels der Drehung des Werkzeugs TOL um die Werkzeugdrehachse XTL wird eine stets annähernd optimale Ausrichtung (Sollwinkel SAG) einer Schneide CTE des Werkzeugs TOL an dem Werkstück WPC verwirklicht. Auf diese Weise kann eine gleichbleibende Oberflächenqualität des Werkstücks WPC durch die Fertigung verwirklicht werden.

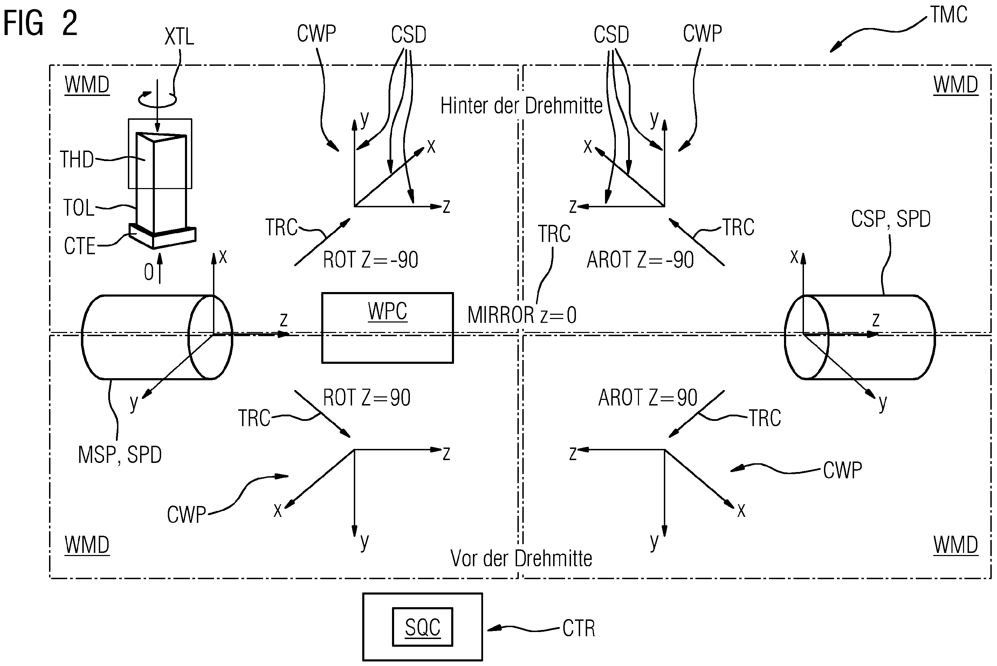

Figur 2 zeigt schematisch eine Illustration, die einzelne Arbeitsbereiche, bzw. einzelne Arbeitsmodi WMD der Drehmaschine TMC darstellt. Linksseitig der Illustration ist eine Hauptspindel MSP vereinfacht als Zylinder dargestellt. Rechtsseitig der Illustration ist spiegelbildlich eine Gegenspindel CSP ebenfalls als Zylinder dargestellt. Das Zusammenwirken der Hauptspindel MSP mit der Gegenspindel CSP ermöglicht die spannende Bearbeitung auf der Drehmaschine TMC auch in Bereichen, wobei eine der beiden Spindeln SPD das zu bearbeitende Werkstück WPC zeitweise hält, und die Drehung des Werkstücks WPC bestimmt. Eine Bearbeitung im Bereich der Einspannung des Werkstücks WPC wird möglich, indem die jeweils gegenüberliegende andere Spindel SPD das Werkstück WPC hält bzw. von der ursprünglichen

Spindel SPD übernimmt und dementsprechend die Drehung des Werkstücks WPC bestimmt, während die ursprünglich haltende Spindel SPD das Werkstück WPC zur Bearbeitung freigibt. Die Spindeln SPD drehen das Werkstück WPC während der Bearbeitung jeweils um eine Werkstückdrehachse XWP. Zum Zwecke der Bearbeitung wird eine Schneide CTE des Werkzeugs TOL an das Werkstück WPC bis zum Spanabhebenden Eingriff herangeführt. Die Drehmaschine TMC weist eine programmierbare Steuerung CTR auf, die mittels der Ausführung von Anweisungssequenzen SQC die Bewegung des Werkzeugs TOL und die Bewegung der Spindeln SPD, insbesondere die Drehung des Werkstücks WPC und die Übergabe an die jeweils andere Spindel SPD steuert CTR. Zu der Bewegung des Werkzeugs TOL gehört ein Verfahren des Werkzeughalters THD entlang von Hauptverfahrwegen, wobei ein Hauptverfahrweg sich im Wesentlichen entlang der Werkstückdrehachse XWP parallel erstreckt und ein anderer Hauptverfahrweg sich im Wesentlichen radial zu der Werkstückdrehachse XWP erstreckt. Der sich radial zur Werkstückdrehachse XWP erstreckende Hauptverfahrweg ist hierbei in der Regel zweidimensional ausgebildet, sodass das Werkzeug TOL unter Veränderung des Radialabstands zur Werkstückdrehachse XWP in einer Radialebene beweglich ist. Insgesamt ergibt sich dadurch eine in gewissen Grenzen vollständig räumliche Beweglichkeit. Der Werkzeughalter THD ist mit dem Werkzeug TOL um die Werkzeugdrehachse XTL drehbar ausgebildet, sodass ein spannender

Berührpunkt TPT der Schneide CTE an dem Werkstück WPC in einem Sollwinkel SAG zu dem Werkstück WPC bzw. der Oberfläche des Werkstücks WPC ausgerichtet werden kann.

Regelmäßig ist der Gesamtarbeitsbereich einer Drehmaschine TMC in verschiedene Teil-Arbeitsbereiche aufgeteilt. Da die Aufteilung nicht rein räumlich ist, sondern sich auf die Bestimmung der Drehung (Drehzahl, Drehrichtung RTD) durch die Hauptspindel MSP bzw. die Gegenspindel CSP bezieht, wird vorliegend statt des Begriffs "Arbeitsbereich" der Begriff "Arbeitsmodus WMD" verwendet. Hierbei ist ein Charakteristikum eines jeden Arbeitsmodus WMD, dass die Drehmaschine TMC eine für den jeweiligen Arbeitsmodus WMD spezifische Festlegungen eines Werkstückkoordinatensystems CWP aufweist. Im Einzelnen sind die Arbeitsmodi WMD bezogen auf eine vertikale Teilungsebene SPP entlang der Werkstückdrehachse XWP charakterisiert durch:
in einem ersten Arbeitsmodus WMD ist der Berührpunkt TPT auf einer ersten Seite FHF der Werkstückdrehachse XWP und die Hauptspindel MSP bestimmt die Drehung des Werkstücks WPC,
in einem zweiten Arbeitsmodus WMD ist der Berührpunkt TPT auf einer ersten Seite FHF der Werkstückdrehachse XWP und die Gegenspindel CSP bestimmt die Drehung des Werkstücks WPC,
in einem dritten Arbeitsmodus WMD ist der Berührpunkt TPT auf einer zweiten Seite SHF der Werkstückdrehachse XWP und die Hauptspindel MSP bestimmt die Drehung des Werkstücks WPC,
in einem vierten Arbeitsmodus WMD ist der Berührpunkt TPT auf einer zweiten Seite SHF der Werkstückdrehachse XWP und die Gegenspindel CSP bestimmt die Drehung des Werkstücks WPC.
Ausgehend von dieser Definition der Arbeitsmodi WMD sieht die Erfindung vor, dass die Anweisungssequenz SQC umfasst:
   - Definieren einer positiven ersten Koordinatenrichtung CFD für alle Arbeitsmodi WMD jeweils in Richtung der Spindel SPD, die die Drehung nicht bestimmt,
   - Definieren einer jeweils positiven zweiten Koordinatenrichtung CSD fortweisend von der Werkstückdrehachse XWP für alle Arbeitsmodi WMD.

Auf diese Weise ist es möglich, dass mittels einer für jeden möglichen Wechsel von einem bestimmten Arbeitsmodus WMD in einen anderen bestimmten Arbeitsmodus WMD eine festgelegte Kette von Rotationen, Spiegelungen und/oder Verschiebungen der Koordinatenangaben CDR der Anweisungssequenz SQC Koordinatenangaben CDR für den jeweils aktuellen Arbeitsmodus WMD kompatibel macht.

Weiterhin ist nach der Erfindung vorgesehen, dass die Anweisungssequenz SQC die folgenden Schritte umfasst:
- Definieren einer positiven Drehrichtung RTD der Werkzeugdrehachse XTL jeweils für alle Arbeitsmodi WMD von der ersten Koordinatenrichtung CFD über den kürzeren Drehwinkel hin zu der zweiten Koordinatenrichtung CSD,
- Definieren eines Nullwinkels ZAG der Werkzeugdrehachse XTL für alle Arbeitsmodi WMD jeweils koinzident mit der jeweils zweiten Koordinatenrichtung CSD.

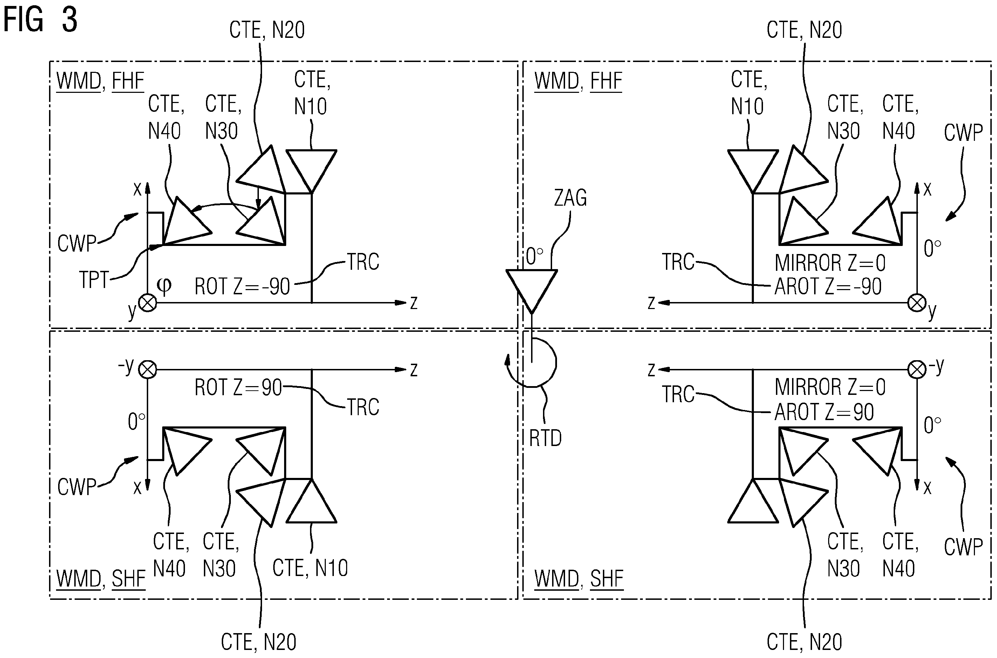

In der Figur 3 ist der Ausgangszustand ohne vollständige Umsetzung der Erfindung dargestellt. Drehangaben der Anweisungssequenz SQC für die Drehung des Werkzeugs TOL um die Werkzeugdrehachse XTL für alle Arbeitsmodi WMD sind für jeden Arbeitsbereich individuell anzupassen. Zu den vier verschiedenen in der Figur 3 dargestellten Arbeitsmodi WMD sind im Folgenden Auszüge aus Anweisungssequenzen SQC wiedergegeben, die eine Winkel-Positionierung der Schneide CTE des Werkzeugs TOL nach dem Stand der Technik bewirken. Die einzelnen Werkstückkoordinatensysteme CWP lassen sich ausgehend von einem Referenzkoordinatensystem jeweils mittels einer Transformationsanweisung TRC ineinander überführen. Diese Transformationsanweisung gilt nicht für die Winkelangaben betreffend die Rotation des Werkzeughalters THD um die Werkzeugdrehachse XTL. Aufeinanderfolgen sind die Anweisungssequenzen SQC der vier Arbeitsmodi WMD beginnend von links nach rechts und von oben nach unten:
Hierbei bedeuten die Angaben N10, N20, N30, N40 Positionen der Schneide CTE während des Fertigungsablaufs.

Die einzelnen Winkelangaben beziehen sich auf den in der Mitte der Figur 3 gezeigten Ausgangs-Nullwinkel ZAG und die positive Drehrichtung RTD.
- in dem ersten Arbeitsmodus WMD:
   ;Teileprogramm 1
   [...]
   ;Aktivierung
   TRAFOON(XY)
   ;Kontur
   N10 G1 Z250 X 100 SP=0
   N20 G1 Z200 SP=-45
   N30 G1 X60
   N40 G1 Z100 SP=45
   [...]
- in dem zweiten Arbeitsmodus WMD:
   ;Teileprogramm 1
   [...]
   ;Aktivierung
   TRAFOON(XY)
   ;Kontur
   N10 G1 Z250 X 100 SP=0
   N20 G1 Z200 SP=45
   N30 G1 X60
   N40 G1 Z100 SP=-45
   [...]
- in dem dritten Arbeitsmodus WMD:
   ;Teileprogramm 1
   [...]
   ;Aktivierung
   TRAFOON(XY)
   ;Kontur
   N10 G1 Z250 X 100 SP=180
   N20 G1 Z200 SP=225
   N30 G1 X60
   N40 G1 Z100 SP=135
   [...]
- in dem vierten Arbeitsmodus WMD:
   ;Teileprogramm 1
   [...]
   ;Aktivierung
   TRAFOON(XY)
   ;Kontur
   N10 G1 Z250 X 100 SP=180
   N20 G1 Z200 SP=135
   N30 G1 X60
   N40 G1 Z100 SP=225
   [...]

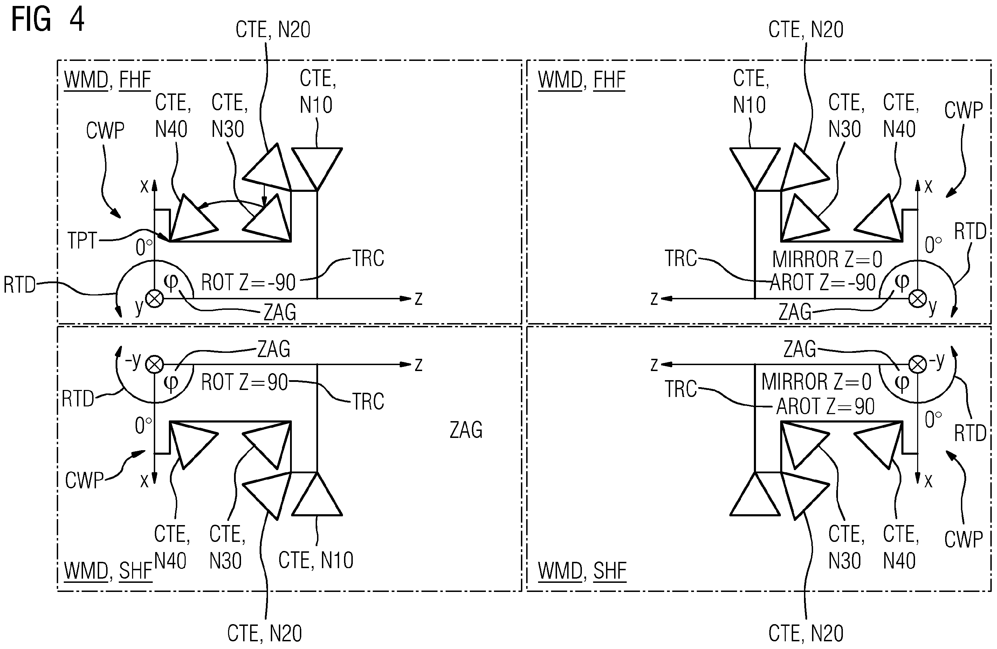

In der Figur 4 ist der Effekt der Festlegung nach der Erfindung dargestellt, der sich derart ergibt, dass die Drehangaben der Anweisungssequenz SQC für die Drehung des Werkzeugs TOL um die Werkzeugdrehachse XTL für alle Arbeitsmodi WMD kompatibel sind. Die Erfindung erreicht dementsprechend das Ziel einer vollautomatischen Umsetzung von Anweisungssequenz SQC auf Drehmaschinen TMC, die eine Aufgliederung in die vier verschiedene oben definierten Arbeitsmodi WMD aufweisen. Zu den vier verschiedenen in der Figur 3 dargestellten Arbeitsmodi WMD sind abweichend die erfindungsgemäßen Festlegungen der Werkstückkoordinatensysteme CWP und die dazugehörigen Transformationsanweisungen TRC dargestellt. Die einzelnen Winkelangaben PHI beziehen sich auf individuelle Ausgangs-Nullwinkel ZAG und positive Drehrichtungen RTD, angegeben für jeden Arbeitsmodus WMD im Ursprung des jeweiligen Werkstückkoordinatensystems CWP.
- Für alle Arbeitsmodi WMD gilt gleichermaßen:
   ;Teileprogramm 1
   [...]
   ;Aktivierung
   TRAFOON(XY)
   ;Kontur
   N10 G1 Z250 X 100 PHI=0
   N20G1 Z200 PHI=45
   N30 G1 X60
   N40 G1 Z100 PHI=-45
   [...]

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zum Betrieb einer Drehmaschine (TMC) zur spanenden Bearbeitung eines Werkstücks (WPC) mittels Drehens,
wobei die Drehmaschine (TMC) Spindeln (SPD) aufweist, umfassend eine Hauptspindel (MSP) und eine Gegenspindel (CSP), die um eine Werkstückdrehachse (XWP) jeweils drehbar ausgeführt sind,
wobei die Drehmaschine (TMC) mindestens einen Werkzeughalter (THD) und mindestens ein Werkzeug (TOL) aufweist,
wobei der Werkzeughalter (THD) das mindestens eine Werkzeug (TOL) zur spanenden Bearbeitung des Werkstücks (WPC) hält und die Bewegung des Werkzeugs (TOL) führt,
wobei das Werkzeug (TOL) mindestens eine Schneide (CTE) zur spanenden Bearbeitung des Werkstücks (WPC) aufweist,
wobei die Drehmaschine (TMC) eine programmierbare Steuerung (CTR) aufweist, die mittels der Ausführung einer Anweisungssequenz (SQC) die Bewegungen der Spindeln (SPD) und des mindestens einen Werkzeugs (TOL) steuert (CTR),
wobei der Werkzeughalter (THD), mit dem mindestens einem Werkzeug (TOL) derart um eine Werkzeugdrehachse (XTL) drehbar ausgebildet ist, dass ein spanender Berührpunkt (TPT) der Schneide (CTE) an dem Werkstück (WPC) in einem Sollwinkel (SAG) zu der Werkstückoberfläche (SWP) ausgerichtet werden kann,
wobei die Drehmaschine (TMC) verschiedene Arbeitsmodi (WMD) des Werkzeugs (TOL) mit unterschiedlichen Festlegungen eines Werkstückkoordinatensystems (CWP) aufweist,
**dadurch gekennzeichnet,**
**dass** die Anweisungssequenz (SQC) umfasst:
- Definieren einer positiven ersten Koordinatenrichtung (CFD) für alle Arbeitsmodi (WMD) jeweils in Richtung der Spindel (SPD), die die Drehung nicht bestimmt,
- Definieren einer jeweils positiven zweiten Koordinatenrichtung (CSD) fortweisend von der Werkstückdrehachse (XWP) für alle Arbeitsmodi (WMD),
so, dass mittels einer für jeden möglichen Wechsel von einem bestimmten Arbeitsmodus (WMD) in einen anderen bestimmten Arbeitsmodus (WMD) eine festgelegte Kette von Rotationen, Spiegelungen und/oder Verschiebungen der Koordinatenangaben (CDR) der Anweisungssequenz (SQC)
Koordinatenangaben (CDR) für den jeweils aktuellen Arbeitsmodus (WMD) kompatibel macht,
wobei die Anweisungssequenz (SQC) weiterhin umfasst:
- Definieren einer positiven Drehrichtung (RTD) der Werkzeugdrehachse (XTL) jeweils für alle Arbeitsmodi (WMD) von der ersten Koordinatenrichtung (CFD) über den kürzeren Drehwinkel hin zu der zweiten Koordinatenrichtung (CSD),
- Definieren eines Nullwinkels (ZAG) der Werkzeugdrehachse (XTL) für alle Arbeitsmodi (WMD) jeweils koinzident mit der jeweils zweiten Koordinatenrichtung (CSD),
so, dass die Drehangaben der Anweisungssequenz (SQC) für die Drehung des Werkzeugs (TOL) um die Werkzeugdrehachse (XTL) für alle Arbeitsmodi (WMD) kompatibel sind.

2. Verfahren nach Anspruch 1, wobei die einzelnen Arbeitsmodi (WMD) mit Bezug zu einer Teilungsebene (SPP) entlang der Werkstückdrehachse (XWP) im Einzelnen sind:
in einem ersten Arbeitsmodus (WMD) ist der Berührpunkt (TPT) auf einer ersten Seite (FHF) der Werkstückdrehachse (XWP) und die Hauptspindel (MSP) bestimmt die Drehung des Werkstücks (WPC),
in einem zweiten Arbeitsmodus (WMD) ist der Berührpunkt (TPT) auf einer ersten Seite (FHF) der Werkstückdrehachse (XWP) und die Gegenspindel (CSP) bestimmt die Drehung des Werkstücks (WPC),
in einem dritten Arbeitsmodus (WMD) ist der Berührpunkt (TPT) auf einer zweiten Seite (SHF) der Werkstückdrehachse (XWP) und die Hauptspindel (MSP) bestimmt die Drehung des Werkstücks (WPC),
in einem vierten Arbeitsmodus (WMD) ist der Berührpunkt (TPT) auf einer zweiten Seite (SHF) der Werkstückdrehachse (XWP) und die Gegenspindel (CSP) bestimmt die Drehung des Werkstücks (WPC).

3. Verfahren nach Anspruch 1 oder 2, wobei die Drehmaschine (TMC) eine zusätzliche Fräsfunktion aufweist zur spanenden Bearbeitung eines Werkstücks (WPC) mittels Fräsens.

4. Verfahren nach Anspruch 1, 2 oder 3, wobei die Drehung der Werkzeugdrehachse (XTL) zur Ausrichtung der Schneide (CTE) an dem spanenden Berührpunkt (TPT) an dem Werkstück (WPC) seitens des Werkzeughalters (THD) von einer Ausgleichsbewegung (CMV) begleitet ist, derart, die Drehung des Werkzeugs (TOL) um die Werkzeugdrehachse (XTL) keinen Einfluss auf die Lage des Berührpunktes (TPT) der Schneide (CTE) an dem Werkstück (WPC) hat.

5. Drehmaschine mit einer Steuerungseinheit (CTR) und einer Schnittstelle zum Empfang einer Anweisungssequenz (SQC) zur Bearbeitung eines Werkstücks (WPC), **dadurch gekennzeichnet, dass** die Steuerungseinheit (CTR) ausgebildet und vorbereitet ist, das Verfahren nach einem der Ansprüche 1 bis 4 auszuführen.
